# EUROPÄISCHE PATENTSCHRIFT

(11) **EP 2 329 162 B1**
(45) Veröffentlichungstag und Bekanntmachung des Hinweises auf die Patenterteilung: **08.02.2012**
(21) Anmeldenummer: 09781128.5
(22) Anmeldetag: 27.07.2009
(51) Int. Cl.: F16D 23/14

(54) **KUPPLUNGSAUSRÜCKLAGER**
CLUTCH RELEASE BEARING
BUTÉE DE DÉBRAYAGE

(30) Priorität: 23.08.2008 DE 102008039529
(43) Veröffentlichungstag der Anmeldung: 08.06.2011
(73) Patentinhaber: Schaeffler Technologies GmbH & Co. KG, 91074 Herzogenaurach (DE)
(72) Erfinder: AMARO, Milton, 18070-295 Sorocaba (BR); CAMPOS, Fabiano, 13309-210 Itu (BR); PRIVATTI, Mario, 18079026 Sorocaba (BR); SILVA, Leonardo, 18016-180 Sorocaba (BR)
(86) Internationale Anmeldenummer: PCT/EP2009/059667
(87) Internationale Veröffentlichungsnummer: WO 2010/023049

(56) Entgegenhaltungen:
- DE-A1- 19 716 218
- DE-A1- 19 837 578
- DE-A1- 19 908 148
- US-A- 3 921 775

## Beschreibung

### Gebiet der Erfindung

Die Erfindung betrifft ein Kupplungsausrücklager mit einem Innenring und mit einem relativ zum Innenring um eine zentrale Drehachse drehbaren Außenring. Bei einem derartigen Kupplungsausrücklager wirkt der Außenring zum Auskuppeln auf eine rotierende Kupplungsdruckplatte, insbesondere auf eine Tellerfeder, während der Innenring an einen stehenden Ausrückmechanismus koppelt.

### Hintergrund der Erfindung

Bei einem Kupplungsausrücklager muss der Spalt zwischen dem Innenring und dem Außenring abgedichtet werden, um zum einen ein Abschleudern des Schmiermittels zu verhindern und um zum anderen das Eindringen von Fremdkörpern, Verunreinigungen und Flüssigkeiten wie Wasser zu vermeiden. Für ein Kupplungsausrücklager mit einem feststehenden Außenring ist hierzu beispielsweise aus der DE 19 70 791 U bekannt, auf dem Außenring einen mehrfach abgewinkelten Befestigungsring vorzusehen, der sowohl den Spalt zwischen Innenring selbst abdichtet als auch der Befestigung einer im Spalt angeordneten Dichtscheibe dient. Der Innenring weist zusätzlich einen radial nach außen gezogenen Flansch auf.

Weiter wird aus der DE 10 2005 060 257 A1 ein entsprechendes Kupplungsausrücklager mit einem feststehenden Außenring ersichtlich, wobei der Spalt zwischen Innenring und Außenring mit einer schleifenden Dichtung abgedichtet ist.

Ein gattungsgemäßes Kupplungsausrücklages ist aus DE-A-198 37578 bekannt.

### Aufgabe der Erfindung

Es ist Aufgabe der Erfindung, ein Kupplungsausrücklager der eingangs genannten Art mit einer weiter verbesserten Abdichtung des Innenraums zwischen Innenring und Außenring anzugeben.

### Lösung der Aufgabe

Die genannte Aufgabe wird erfindungsgemäß gelöst durch ein Kupplungsausrücklager mit der Merkmalskombination gemäß Anspruch 1.

Demnach weist das angegebene Kupplungsausrücklager einen feststehenden Innenring und einen hierzu relativ um eine zentrale Drehachse drehbaren Außenring auf, wobei der Außenring im Wesentlichen als eine Hülse mit einer in Umfangsrichtung verlaufenden Hülsenwand und mit einem sich in radialer Richtung erstreckenden Hülsenboden ausgebildet ist, und wobei der Innenring unter Ausbildung eines Ringspaltes in die Hülse eingesetzt ist. Der Ringspalt zwischen dem Innenring und dem Außenring ist mit einem radial nach außen verlaufenden Deckel abgedeckt, wobei die Hülsenwand in axialer Richtung wenigstens bis an den Deckel verlängert ist. Mit anderen Worten ist die offene Seite der Hülse mit dem Ringspalt zwischen Innen- und Außenring mit einem Deckel abgedeckt. Dabei ist der axiale Spalt zum Deckel hin mit der verlängerten Hülsenwand radial nach außen verschlossen. Um eine Rotierbarkeit des Außenrades gegenüber dem Deckel zu gewährleisten, verbleibt selbstverständlich ein kleiner Restspalt zwischen der verlängerten Hülsenwand und dem Deckel.

Außerden umfasst der Deckel einen axial verlängerten ersten Umfangsbereich, der von der Hülsenwand in radialem Abstand umgriffen ist. Mit anderen Worten weist der Deckel einen abgewinkelten, sich in axialer Richtung erstreckenden Umfangsbereich auf, der in die einen Hohlzylinder darstellende Hülsenwand eingesetzt ist. Durch diese Ausgestaltung wird der Ringspalt zwischen der Hülsenwand und dem Deckel bzw. seinem axial verlängerten Umfangsbereich verlängert, so dass die Dichtfunktion weiter verbessert ist.

Weiterhin umfasst der Deckel einen zum ersten Umfangsbereich axial versetzten zweiten Umfangsbereich mit einem größeren Radius, wobei der erste Umfangsbereich über einen Radiensprung in den zweiten Umfangsbereich übergeht, und wobei die Hülsenwand in axialer Richtung über den ersten Umfangsbereich bis an den Radiensprung verlängert ist. Durch diese Ausgestaltung wird eine Labyrinth-Dichtung geschaffen. Zwischen der Hülsenwand und dem ersten Umfangsbereich ist ein Ringspalt ausgebildet, der am Radiensprung in einen Axialspalt übergeht, der zwischen dem Radiensprung und dem Ende der verlängerten Hülsenwand gebildet ist.

Der Deckel kann hierbei als ein Dichtblech, ein Zentrierblech, als eine Dichthülse oder als ein Befestigungselement zur Ankopplung des Kupplungsausrücklagers an den Ausrückmechanismus ausgestaltet sein. Insbesondere kann der Deckel als eine Spannhülse ausgebildet sein, die an einen hydraulischen Geberzylinder ankoppelt.

In einer vorteilhaften Ausgestaltung ist die Hülsenwand mit radialem Abstand in axialer Richtung bis über den Deckel geführt. Bei dieser Ausgestaltung ist der Axialspalt zum Deckel hin vollständig überdeckt. Zwischen dem Außenumfang des Deckels und dem Innenumfang der Hülsenwand verbleibt lediglich ein geringer Ringspalt, so dass ein Eindringen von Verunreinigungen oder Flüssigkeiten zusätzlich erschwert ist. Insbesondere wirkt die verlängerte Hülsenwand durch ihre Eigenrotation für Schmutz oder Flüssigkeit wie eine Zentrifuge. Verunreinigungen und Flüssigkeiten werden von der rotierenden Hülsenwand aufgrund der Zentrifugalkraft vom Spalt weggeschleudert.

Zweckmäßigerweise weisen im Falle der vorgeschriebenen Labyrinth-Dichtung die Hülsenwand und der zweite Umfangsbereich in etwa denselben Außendurchmesser auf. Hierdurch wird die radiale Länge des Axialspalts zwischen dem Radiensprung und dem Ende der verlängerten Hülsenwand maximiert, was wiederum die Dichtfunktionalität verbessert.

Je nach Dimensionierung und Spezifikation kann der Deckel aus jeweils geeignetem Material gefertigt sein. Insbesondere kann der Deckel aus einem Kunststoff oder aus einem Metall hergestellt sein, wobei sich bei letzterem aus Kostengründen die Ausgestaltung als ein Blechformteil anbietet.

Im Falle der Fertigung des Deckels aus einem Kunststoff bietet es sich insbesondere an, den Radiensprung durch eine umlaufende Einkerbung in den Deckel einzubringen. Durch eine solche, dem Außenring zugewandte Einkerbung wird eine kostengünstige Möglichkeit geschaffen, einen dichtenden Überlapp zwischen der Hülsenwand und dem Deckel auszubilden.

Vorteilhafterweise sind auch der Außenring und/oder der Innenring als Blechformteile ausgebildet. Dabei ist insbesondere eine Kaltumformung eine kostengünstige Fertigungsvariante.

Wie erwähnt, ist das Kupplungsausrücklager vorteilhafterweise zur Ankopplung an einen hydraulischen Geberzylinder ausgebildet. Die Ausrückkräfte werden dann über den Deckel auf den Innenring übertragen und von dort über die Lagerung über den Außenring auf eine Kupplungsdruckplatte zum Auskuppeln weitergeleitet. Hierbei ist der Deckel insbesondere als eine Spannhülse ausgebildet, die mit dem Innenring verbunden ist.

Der Deckel bzw. die Spannhülse und der Innenring können zweiteilig ausgebildet sein, so dass unterschiedliche Materialien gewählt werden können, die für die jeweilige Beanspruchung oder Anforderung optimiert sein können. In einer günstigen Variante sind aber der Innenring und der Deckel einstückig ausgebildet, insbesondere als Blechformteil gefertigt. Der dann mehrfach abgewinkelte Innenring kann kostengünstig durch eine Kaltumformung hergestellt werden.

In einer besonders vorteilhaften Ausgestaltung ist der Ringspalt zwischen dem Innenring und dem Außenring zusätzlich mit einer schleifenden Dichtung, wie insbesondere mittels eines entsprechend geformten, Dichtlippen aufweisenden Dichtrings, abgedichtet. Alternativ kann dem Ringspalt auch eine entsprechend ausgestaltete Abdeckkappe aufgesetzt sein.

### Kurze Beschreibung der Zeichnung

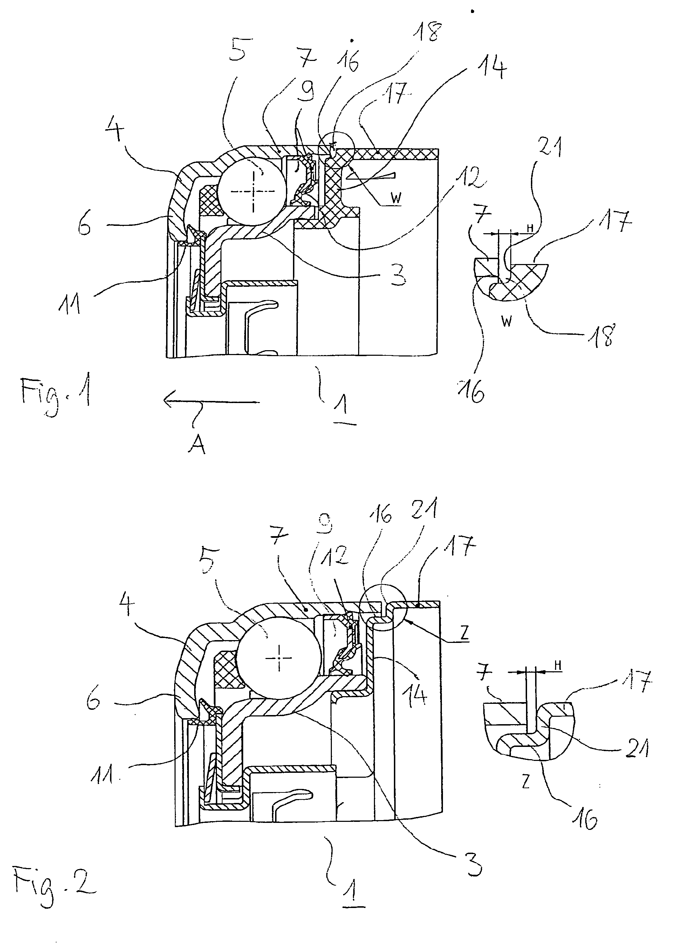

Ausführungsbeispiele der Erfindung werden anhand einer Zeichnung näher erläutert. Dabei zeigen die Fig. 1 bis 3 jeweils in einer Querschnittszeichnung unterschiedliche Ausführungsformen eines Kupplungsausrücklagers, wobei der Außenring zur Verbesserung der Dichtfunktionalität in axialer Richtung verlängert ist.

### Ausführliche Beschreibung der Zeichnung

In Fig. 1 ist ein Querschnitt eines Kupplungsausrücklagers 1 dargestellt, welches einen feststehenden Innenring 3 und einen umlaufenden Außenring 4 umfasst. Dabei ist der Außenring 4 an dem Innenring 3 mittels eines Wälzlagers gelagert. Als Wälzkörper sind Kugeln 5 eingesetzt.

Der Außenring 4 ist nach Art einer Hülse ausgestaltet und umfasst einen Hülsenboden 6 sowie eine in Umfangsrichtung umlaufende Hülsenwand 7. Der Hülsenboden 6 ist dabei ballig ausgeführt und dient beim Auskuppeln der Anlage gegen eine Kupplungsdruckplatte. Der Hülsenboden 6 insgesamt ist ringförmig ausgeführt, so dass eine zentrale Öffnung verbleibt, durch die beispielsweise eine Getriebeeingangswelle verläuft.

Der Innenring 3 ist in den durch den Außenring 4 vorgegebenen Hohlzylinder eingesetzt, wobei auf der offenen Seite in radialer Richtung zwischen dem Innenring 3 und dem Außenring 4 ein Ringspalt 9 verbleibt. Um ein Eindringen von Fremdkörpern, Verunreinigungen, Schmutz, Flüssigkeiten und insbesondere von Wasser in den Lagerinnenraum zu verhindern, ist auf Seite des balligen Hülsenbodens 6 der Spalt zwischen dem Innenring 3 und dem Außenring 4 mit einem umlaufenden Dichtring 11 abgedichtet, der eine schleifende Dichtung bildet. Auf der dem Hülsenboden 6 abgewandten Seite ist der Ringspalt 9 zwischen dem Innenring 3 und dem Außenring 4 mit einem Dichtring 12 abgedichtet, der ebenfalls als schleifende Dichtung ausgebildet ist und hierzu entsprechende Dichtlippen aufweist. Die Dichtringe 11, 12 sind insbesondere aus einem Elastomer, insbesondere aus einem Gummi, gefertigt.

Dem Innenring 3 ist auf der dem Hülsenboden 6 abgewandten Seite ein Deckel 14 aus Kunststoff aufgesetzt, der als eine Spannhülse ausgebildet ist und zur Ankopplung an einen hydraulischen Geberzylinder vorgesehen ist. Der Deckel 14 deckt den Ringspalt 9 ab, wozu er radial nach außen geführt ist. Am radialen äußeren Ende ist eine Einkerbung 18 umlaufend eingebracht, so dass ein erster kurzer Umfangsbereich 16 resultiert, der über einen Radiensprung in einen zweiten, axial verlängerten Umfangsbereich 17 übergeht. Die genaue Ausgestaltung der Einkerbung 18 wird aus der eingezeichneten Detailansicht W ersichtlich. Dort ist insbesondere der Radiensprung 21 eingezeichnet.

Die Hülsenwand 7 ist in radialer Richtung bis über den Deckel 14 hinaus verlängert. Die Hülsenwand 7 überdeckt insbesondere teilweise den ersten Umfangsbereich 16. Mit anderen Worten erstreckt sich die axial verlängerte Hülsenwand 7 bis an den Radiensprung 21 heran, wobei ein geringes Spaltmaß H verbleibt, so dass der Außenring 4 gegenüber dem Deckel 14 drehbar verbleibt.

Es wird ersichtlich, dass infolge des axialen Überlapps des ersten Umfangsbereichs 16 mit der verlängerten Hülsenwand 7 eine Dichtfunktionalität geschaffen wird, die ein Eindringen von Verunreinigungen und Flüssigkeiten in den Ringspalt 9 verhindert. Insbesondere wird ein Eindringen von Verunreinigungen und Flüssigkeiten in den Axialspalt zwischen dem Dichtring 12 und dem Deckel 14 verhindert, so dass eine Kontamination des eingesetzten Dichtrings 12 vermieden wird.

In Fig. 2 ist ein zu Fig. 1 ähnliches Kupplungsausrücklager 1 dargestellt. Anstelle eines Deckels 14 aus Kunststoff ist nun ein Deckel 14 aus Stahl eingesetzt, welcher mittels Kaltumformung hergestellt ist. Auch der Deckel 14 gemäß Fig. 2 ist als eine Spannhülse ausgebildet, die der Ankopplung an einen hydraulischen Geberzylinder dient. Der in Fig. 2 dargestellte Deckel 14 weist mehrere Radiensprünge auf. Insbesondere ist ein erster Umfangsbereich 16 vorgesehen, der über einen Radiensprung 21 in einen zweiten, äußeren Umfangsbereich 17 übergeht. Wiederum erstreckt sich die Hülsenwand 7 in radialer Richtung bis auf einen Restspalt bis an den Radiensprung 21, so dass eine Teilüberlappung zwischen der Hülsenwand 7 und dem ersten Umfangsbereich 16 vorliegt. Dies wird aus der Detailansicht Z ersichtlich. Zwischen dem Ende der Hülsenwand 7 und dem Radiensprung 21 verbleibt ein Spaltmaß H.

Durch die gezeigte Ausgestaltung wird zur Abdichtung des Ringspalts 9 bzw. des darin angeordneten Dichtrings 12 gegen Verunreinigungen von außen eine Labyrinth-Dichtung geschaffen.

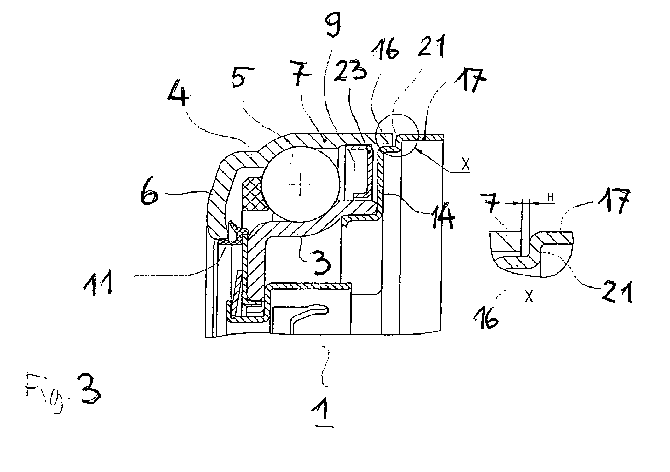

In Fig. 3 wird eine Ausführungsvariante eines Kupplungsausrücklagers 1 dargestellt, die im Wesentlichen der Variante gemäß Fig. 2 entspricht. Im Unterschied hierzu ist nun jedoch der Dichtring 12 aus dem Ringspalt 9 zwischen dem Innenring 3 und dem Außenring 4 entfernt und durch eine eingesetzte Abdeckkappe 23 ersetzt.

In den Fig. 2 und 3 weisen die Hülsenwand 7 und der zweite Umfangsberiech 17 des Deckels 14 denselben Außendurchmesser auf. Hierdurch ist die radiale Länge des Axialspalts zwischen dem Ende der Hülsenwand 7 und dem Radiensprung 21 maximiert.

### Liste der Bezugszahlen

- 1: Kupplungsausrücklager
- 3: Innenring
- 4: Außenring
- 5: Kugel
- 6: Hülsenboden
- 7: Hülsenwand
- 7': Stufe
- 9: Ringspalt
- 11: Dichtring
- 12: Dichtring
- 14: Deckel
- 16: erster Umfangsbereich
- 17: zweiter Umfangsbereich
- 18: Einkerbung
- 21: Radiensprung
- 23: Abdeckkappe
- 25: Ringspalt

- A: Drehachse
- H: Spaltmaß
- W: Detailansicht
- X: Detailansicht
- Z: Detailansicht

## Patentansprüche

1. Kupplungsausrücklager (1) mit einem Innenring (3) und mit einem relativ zum Innenring (3) um eine zentrale Drehachse (A) drehbaren Außenring (4), wobei der Außenring (4) im Wesentlichen als eine Hülse mit einer in Umfangsrichtung verlaufenden Hülsenwand (7) und mit einem sich in radialer Richtung erstreckenden Hülsenboden (8) ausgebildet ist, wobei der Innenring (3) unter Ausbildung eines Ringspaltes (9) in die Hülse eingesetzt ist, wobei der Ringspalt (9) von einem radial nach außen verlaufenden Deckel (14) abgedeckt ist, und wobei die Hülsenwand (7) in axialer Richtung wenigstens bis an den Deckel (14) verlängert ist, **dadurch gekennzeichnet, dass** der Deckel (14) einen axial verlängerten ersten Umfangsbereich (16) umfasst, der von der Hülsenwand (7) mit radialem Abstand umgriffen ist, und der Deckel (14) einen zum ersten Umfangsbereich (16) axial versetzten zweiten Umfangsbereich (17) mit einem größerem Radius umfasst, wobei der erste Umfangsbereich (16) über einen Radiensprung (21) in den zweiten Umfangsbereich (17) übergeht, und wobei die Hülsenwand (7) in axialer Richtung über den ersten Umfangsbereich (16) bis an den Radiensprung (21) verlängert ist.

2. Kupplungsausrücklager (1) nach Anspruch 1, wobei die Hülsenwand (7) mit radialem Abstand in axialer Richtung bis über den Deckel (14) geführt ist.

3. Kupplungsausrücklager (1) nach Anspruch 4, wobei die Hülsenwand (7) und der zweite Umfangsbereich (17) in etwa denselben Außendurchmesser aufweisen.

4. Kupplungsausrücklager (1) nach einem der vorhergehenden Ansprüche, wobei der Radiensprung (21) als eine umlaufende Einkerbung (18) in den Deckel (14) eingebracht ist.

5. Kupplungsausrücklager (1) nach einem der vorhergehenden Ansprüche, wobei der Deckel (14) aus einem Kunststoff gefertigt ist.

6. Kupplungsausrücklager (1) nach einem der Ansprüche 1 bis 6, wobei der Deckel (14) aus einem Blechformteil gefertigt ist.

7. Kupplungsausrücklager (1) nach einem der vorhergehenden Ansprüche, wobei der Außenring (4) und/oder der Innenring (3) aus einem Blechformteil gefertigt sind/ist.

8. Kupplungsausrücklager (1) nach einem der vorhergehenden Ansprüche, wobei der Deckel (14) als eine Spannhülse ausgebildet ist, die mit dem Innenring (3) verbunden ist.

9. Kupplungsausrücklager (1) nach einem der Ansprüche 1 bis 8, wobei der Innenring (3) und der Deckel (14) einstückig ausgebildet, insbesondere als ein Blechformteil gefertigt sind.

10. Kupplungsausrücklager (1) nach einem der vorhergehenden Ansprüche, wobei der Ringspalt (9) mittels einer schleifenden Dichtung in axialer Richtung abgedichtet ist.

## Claims

1. Clutch release bearing (1) having an inner ring (3) and having an outer ring (4) which can rotate relative to the inner ring (3), about a central rotational axis (A), wherein the outer ring (4) is embodied essentially as a sleeve with a sleeve wall (7) running in the circumferential direction and with a sleeve base (8) extending in the radial direction, wherein the inner ring (3) is inserted into the sleeve so as to form a ring gap (9), wherein the ring gap (9) is covered by a cover (14) running away radially outwards, and wherein the sleeve wall (7) is prolonged in the axial direction at least as far as the cover (14), **characterized in that** the cover (14) comprises an axially prolonged first circumferential region (16) around which the sleeve wall (7) engages with radial spacing, and the cover (14) comprises a second circumferential region (17) which is offset axially with respect to the first circumferential region (16) and has a relatively large radius, wherein the first circumferential region (16) merges with the second circumferential region (17) via a jump (21) in the radius, and wherein the sleeve wall (7) is prolonged in the axial direction as far as the jump (21) in the radius via the first circumferential region (16).

2. Clutch release bearing (1) according to Claim 1, wherein the sleeve wall (7) is made to extend in the axial direction as far as over the cover (14) with radial spacing.

3. Clutch release bearing (1) according to Claim 4, wherein the sleeve wall (7) and the second circumferential region (17) have approximately the same external diameter.

4. Clutch release bearing (1) according to one of the preceding claims, wherein the jump (21) in the radius is provided in the cover (14) as a circumferential notch (18).

5. Clutch release bearing (1) according to one of the preceding claims, wherein the cover (14) is fabricated from a plastic.

6. Clutch release bearing (1) according to one of Claims 1 to 6, wherein the cover (14) is fabricated from a shaped piece of sheet metal.

7. Clutch release bearing (1) according to one of the preceding claims, wherein the outer ring (4) and/or the inner ring (3) are/is fabricated from a shaped piece of sheet metal.

8. Clutch release bearing (1) according to one of the preceding claims, wherein the cover (14) is embodied as a clamping sleeve which is connected to the inner ring (3).

9. Clutch release bearing (1) according to one of Claims 1 to 8, wherein the inner ring (3) and the cover (14) are embodied in one piece and are, in particular, fabricated as a shaped piece of sheet metal.

10. Clutch release bearing (1) according to one of the preceding claims, wherein the annular gap (9) is sealed in the axial direction by means of a sliding seal.

## Revendications

1. Butée de débrayage (1) comprenant une bague interne (3) et une bague externe (4) pouvant tourner autour d'un axe de rotation central (A) par rapport à la bague interne (3), la bague externe (4) étant réalisée essentiellement sous forme de douille ayant une paroi de douille (7) s'étendant dans la direction périphérique et un fond de douille (8) s'étendant dans la direction radiale, la bague interne (3) étant insérée dans la douille en formant une fente annulaire (9), la fente annulaire (9) étant recouverte d'un couvercle (14) s'étendant radialement vers l'extérieur, et la paroi de douille (7) étant prolongée dans la direction axiale au moins jusqu'au couvercle (14), **caractérisée en ce que** le couvercle (14) comprend une première région périphérique (16) prolongée axialement, qui est entourée à distance radiale par la paroi de douille (7), et le couvercle (14) comprend une deuxième région périphérique (17) décalée axialement par rapport à la première région périphérique (16), avec un plus grand rayon, la première région périphérique (16) se prolongeant par le biais d'un saut de rayon (21) en la deuxième région périphérique (17), et la paroi de douille (7) étant prolongée dans la direction axiale par le biais de la première région périphérique (16) jusqu'au saut de rayon (21).

2. Butée de débrayage (1) selon la revendication 1, dans laquelle la paroi de douille (7) est guidée à distance radiale dans la direction axiale jusqu'au-dessus du couvercle (14).

3. Butée de débrayage (1) selon la revendication 1, dans laquelle la paroi de douille (7) et la deuxième région périphérique (17) présentent approximativement le même diamètre extérieur.

4. Butée de débrayage (1) selon l'une quelconque des revendications précédentes, dans laquelle le saut de rayon (21) est réalisé sous la forme d'une encoche (18) dans le couvercle (14).

5. Butée de débrayage (1) selon l'une quelconque des revendications précédentes, dans laquelle le couvercle (14) est fabriqué en matière plastique.

6. Butée de débrayage (1) selon l'une quelconque des revendications 1 à 6, dans laquelle le couvercle (14) est fabriqué en une pièce façonnée en tôle.

7. Butée de débrayage (1) selon l'une quelconque des revendications précédentes, dans laquelle la bague externe (4) et/ou la bague interne (3) sont fabriquées en une pièce façonnée en tôle.

8. Butée de débrayage (1) selon l'une quelconque des revendications précédentes, dans laquelle le couvercle (14) est réalisé sous forme de douille de serrage, qui est connectée à la bague interne (3).

9. Butée de débrayage (1) selon l'une quelconque des revendications 1 à 8, dans laquelle la bague interne (3) et le couvercle (14) sont réalisés d'une seule pièce, notamment sous la forme d'une pièce façonnée en tôle.

10. Butée de débrayage (1) selon l'une quelconque des revendications précédentes, dans laquelle la fente annulaire (9) est étanchéifiée dans la direction axiale au moyen d'un joint d'étanchéité frottant.
